# EUROPEAN PATENT APPLICATION

(11) **EP 4 711 019 A1**
(43) Date of publication of application: **18.03.2026**
(21) Application number: 25202883.2
(22) Date of filing: 17.09.2025
(51) Int. Cl.: A63F 13/355, A63F 13/358, A63F 13/843

(54) **RESOURCE-EFFICIENT PROVISIONING OF MULTI-USER APPLICATIONS**

(30) Priority: 17.09.2024 GB 202413675; 03.12.2024 GB 202417712; 03.12.2024 GB 202417714; 03.12.2024 GB 202417717; 03.12.2024 GB 202417719
(71) Applicant: Sony Interactive Entertainment Inc., Tokyo 108-0075 (JP)
(72) Inventor: STEMPLE, Llyod Preston, London, W1F 7LP (GB); STARKEY, Robert Christopher, London, W1F 7LP (GB); CLARKE, Jake Leigh, London, W1F 7LP (GB); ANDERSON, Mark, London, W1F 7LP (GB)
(74) Representative: Fish & Richardson P.C.

(57) **Abstract**

Methods, systems, and apparatus for executing a video game can include executing a first instance at a first processing device, receiving data from a second processing device over a network, the data corresponding to a second instance executed concurrently with the first instance, the second instance being instantiated by the second processing device in response to one or more events detected by the first processing device, providing inputs received from the first control device to the first instance of the video game, the first instance being responsive to inputs received from the first control device, transmitting inputs received from the second control device to the second processing device, the second instance being responsive to inputs received from the second control device, generating images for display based on the first instance and the second instance, and displaying the generated images.

## Description

### CROSS-REFERENCE TO RELATED APPLICATIONS

This application claims the benefit of and priority to UK App. No. 2413675.6, filed on September 17, 2024, and entitled Multiplayer Gaming System and Method, UK App. No. 2417712.3, filed on December 3, 2024, and entitled Multiplayer Gaming System and Method, UK App. No. 2417714.9, filed on December 3, 2024, and entitled Multiplayer Gaming System and Method, UK App. No. 2417717.2, filed on December 3, 2024, and entitled Multiplayer Gaming System and Method, and UK App. No. 2417719.8, filed on December 3, 2024, and entitled Multiplayer Gaming System and Method, each of which is incorporated herein by reference in their entireties.

### TECHNICAL FIELD

This specification relates generally to applications, such as video games, and more particularly to multi-user applications, such as multiplayer video games.

### BACKGROUND

Computer-executed applications, such as video games are executed using hardware (processors, memory, network bandwidth) to provide users with immersive and visually rich gaming experiences. Hardware can be provided in the form of desktop computers, laptop computers, tablet computing devices, smartphones, dedicated gaming consoles, and the like. Some applications, such as modern video games provide, among other features, high quality, photo-realistic graphics, audio, integrated artificial intelligence (AI), open gaming worlds, multiplayer integration, and the like. As such, such applications can place a heavy burden on available resources of the underlying hardware.

### SUMMARY

This specification describes systems, methods, devices, and other techniques relating to applications and more particularly to multi-user applications (e.g., multiplayer video games).

In general, innovative aspects of the subject matter described in this specification can include a first control device associated with a first user and a second control device associated with a second user, a first processing device configured to receive inputs from each of the first control device and the second control device, the first processing device including a processor configured to execute a first instance of the video game, a communication unit configured to receive data from a second processing device over a network, the data corresponding to a second instance of the video game being executed concurrently with the first instance, the second instance being instantiated by the second processing device in response to one or more events detected by the first processing device, an input control unit configured to provide inputs received from the first control device to the first instance of the video game, and to transmit inputs received from the second control device to the second processing device, the first instance being responsive to inputs received from the first control device and the second instance being responsive to inputs received from the second control device, and an image generation unit configured to generate images for display based on output of the first instance and output of the second instance, and a display device configured to display the images generated by the image generation unit. Other implementations of this aspect include corresponding systems, apparatus, and computer programs, configured to perform the actions of the methods, encoded on computer storage devices.

These and other implementations can each optionally include one or more of the following features: the second processing device is a games console or a cloud gaming server communicably connected to the first processing device over the network; the communication unit is configured to receive data comprising output video of the second instance of the video game; the image generation unit is configured to generate a split-screen image including output video of each of the first and second instances of the video game; the processor is configured to adapt one or more settings of the first instance of the video game based on one or more of one or more parameters associated with the second instance of the video game, the output video of the second instance of the video game, and properties of the network; the communication unit is configured to receive data including results of one or more simulations performed by the second instance of the video game, wherein the results of the one or more simulations are provided to the first instance of the video game; the processor is configured to identify a latency associated with receiving of data from the second processing device, and to apply one or more of an input latency and a display latency to execution of the first instance responsive to the latency; the first processing device is configured to output audio for each instance of the video game using different respective audio channels; the processor is configured to modify a camera viewpoint associated with the first instance of the video game responsive to an output by the second instance of the video game; each of the first instance and second instance of the video game are capable of supporting a single player only; the second instance of the video game is capable of supporting multiple players; and a third control device associated with a third user and the input control unit is further configured to transmit inputs received from the third control device to the second processing device, the second instance being further responsive to inputs received from the third control device.

The present disclosure also provides a non-transitory computer-readable storage medium coupled to one or more processors and having instructions stored thereon which, when executed by the one or more processors, cause the one or more processors to perform operations in accordance with implementations provided herein.

It is appreciated that the methods and systems in accordance with the present disclosure can include any combination of the aspects and features described herein. That is, methods and systems in accordance with the present disclosure are not limited to the combinations of aspects and features specifically described herein, but also include any combination of the aspects and features provided.

The details of one or more implementations of the subject matter described in this specification are set forth in the accompanying drawings and the description below. Other features, aspects, and advantages of the subject matter will become apparent from the description, the drawings, and the claims.

### BRIEF DESCRIPTION OF THE DRAWINGS

FIGs. 1A to 1E collectively depict an example progression of establishing a multi-user session for an application in accordance with implementations of the present disclosure.
FIGs. 2 and 3 depict example processes that can be executed in accordance with implementations of the present disclosure.
FIG. 4 depicts example computing devices and associated accessories that can be employed to execute implementations of the present disclosure.

Like reference numbers and designations in the various drawings indicate like elements.

### DETAILED DESCRIPTION

This specification describes systems, methods, devices, and other techniques relating to applications and more particularly to multi-user applications (e.g., multiplayer video games).

Implementations of the present disclosure are described in further detail herein with reference to video games as an example of an implementation to aid in clarity of understanding. However, it is contemplated that the techniques described herein can be equally applied to any other suitable application, in which multiple users are to participate concurrently. This can include, for example, and without limitation, applications such as media applications, for example, such as applications which enable users to access free viewpoint video content - each of a plurality of users can view the content from their own viewpoint, thereby implementing a multi-user arrangement.

To provide context for the subject matter of the present disclosure, and as introduced above, modern video games provide increasingly immersive and visually rich gaming experiences and provide, among other features, high quality, photo-realistic graphics, high-quality audio, integrated artificial intelligence (AI), open gaming worlds, multiplayer integration, and the like. With the increasing complexity and quality of video games, demands on hardware (processors, memory, network bandwidth) correspondingly increase. For example, more powerful and capable hardware can be required to execute video games and/or limits can be placed on the functionality of video games in order to enable video games to be executed under realistic hardware constraints.

With regard to multiplayer gaming, various multiplayer scenarios can be supported and can include, for example, online multiplayer, local area network (LAN) multiplayer, and so-called couch cooperative (co-op). Here, online multiplayer and LAN multiplayer refer to network-based multiplayer scenarios (e.g., online being Internetbased, LAN being LAN-based), in which multiple computing devices (e.g., computers, gaming consoles) of respective users (players) communicate over a network for multiplayer gaming. In such multiplayer scenarios, the users are remote from one another (e.g., each user has their own computing device and display screen).

In contrast, couch co-op refers to a scenario, in which multiple users (players) are proximate to each other, such as sharing the same physical space (e.g., sitting on the same couch). For example, all users share the same computing device and display screen. However, couch co-op increases the burden on technical resources of the computing device. More particularly, the same computing device is burdened with executing multiple instances of a video game, an instance for each player, and integrating and orchestrating inputs to and outputs from the multiple instances to provide the multiplayer experience.

As discussed above, resource-intensive video games can push the limits of available hardware. As such, features of video games, such as multiplayer integration, can be restricted. For example, a video game can limit multiplayer integration (e.g., limit the number of users) or be absent multiplayer integration, because resources of underlying hardware (e.g., a gaming console) are insufficient to enable a certain number of players and/or multiplayer integration as a whole. Such limitations can be imposed by the hardware or by any other appropriate computing arrangement. For example, a video game can be developed on the basis of known hardware capabilities (e.g., know processing, memory, etc. of a particular gaming console) and/or information about average or expected computing power available to users.

Because multiplayer scenarios, such as couch co-op, place a heavier burden on technical resources (e.g., a single computing device managing all instances of the multiple users), video games can be more restrictive than other multiplayer scenarios. For example, a video game can be wholly absent couch co-op (e.g., because the hardware cannot handle more than one instance) or place tighter restrictions (e.g., limit couch co-op to two users, because the hardware cannot handle more than two instances).

In view of the foregoing, implementations of the present disclosure provide systems and methods for resource-efficient provisioning of multi-user integration in video gaming systems. As described in further detail herein, implementations according to the present disclosure provide the ability for two or more users to interact with separate game instances through a (same) local device, where one or more of the instances are executed by another (remote) device. This enables a local multiplayer experience, such as couch co-op, to be provided for content (video games), for which this would otherwise not be an option for that local device (e.g., due to technical constraints of the local device, such as limited available processing power and/or memory). At least one of the instances is executed remotely to that local device with a network connection being used to transmit images, audio, and/or data to the local device.

Implementations of the present disclosure are described in further detail herein with non-limiting reference to two users being provided with a multiplayer gaming experience. It is contemplated, however, that implementations of the present disclosure can be realized with any appropriate number of users. For example, in the case that each instance supports four players, two instances could be used to provide an (up to) eight player gaming experience using techniques described herein. Similarly, it is considered that a greater number of instances of a game could be utilized in combination so as to provide a gaming experience for a greater number of players. A combination of the two could also be utilized, in which three or more game instances (each able to support two or more players) are used. In any case, the result is achieved in which more users than would otherwise be able to play a game locally are able to play using a single device despite technical limitations.

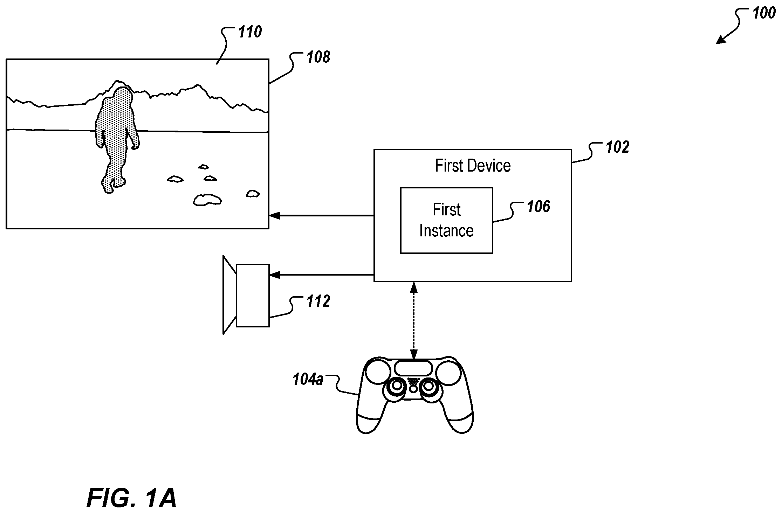

FIGs. 1A to 1E depict an example progression 100 of establishing a couch co-op session in accordance with implementations of the present disclosure.

With particular reference to FIG. 1A, a first processing device 102 and a first control device 104a are provided for execution of a video game. In some examples, the first processing device 102 executes a first instance 106 of the video game and a display 108 depicts first graphics 110 of the video game as generated using the first instance 106. In some examples, audio of the first instance 106 is provided from a speaker 112. In some examples, the first processing device 102 is considered a local device in that the first processing device 102 is located proximate to a first user that uses the first control device 104a and that views the first display 108. The first processing device 102 can be any appropriate computing device that can execute the first instance 106 of the video game (e.g., a gaming console, a smartphone, a desktop computer, a tablet computing device, a server). The example of FIG. 1A can be representative of play of the video game at a time *t*₁ during a single player session.

In accordance with implementations of the present disclosure, it can be determined that a second user is to interact with the first processing device 102 concurrently with the first user. For example, an indication can be provided to the first processing device 102 to indicate that the second user is to interact with the first processing device 102. In some examples, the indication can be provided using the first control device 104a (e.g., the first user can provide input to the first control device 104a indicating that a second user is to interact with the first processing device 102). In some examples, the indication can be provided using another controller (e.g., input to the other controller can indicate that a second user is to interact with the first processing device 102).

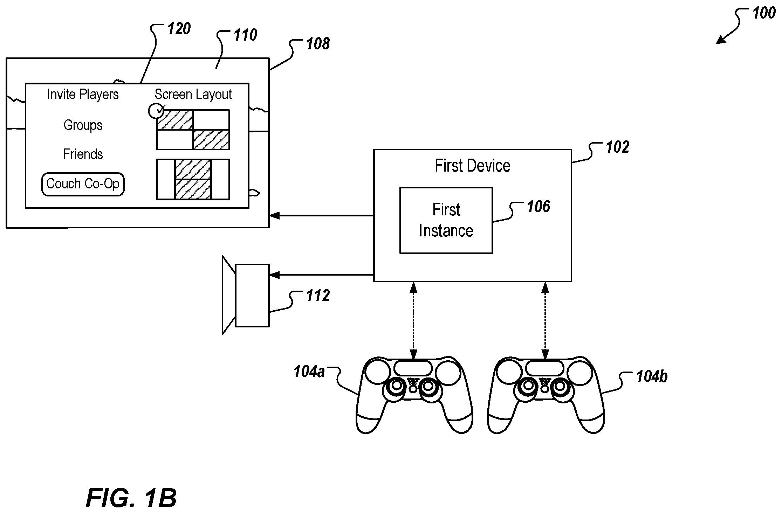

Referring now to FIG. 1B, which can be representative of a time *t*₂, an interface 120 is displayed that can be used to add one or more second users. In some examples, the interface 120 is displayed in response to the indication that a second user is to interact with the first processing device 102. In some examples, play of the first instance 106 is paused while the interface 120 is displayed. In some examples, a couch co-op option is selected as well as a screen layout within the interface 120.

In some examples, a second control device 104b is connected (e.g., wired, wireless) with the first processing device 102 to provide input to and receive output from the first processing device 102. In some examples, connection of the second control device 104b provides the indication that a second user is to interact with the first processing device 102, which prompts pause of the play and display of the interface 120. In some examples, the indication is provided prior to connection of the second control device 104b to the first processing device 102. For example, the second control device 104b can be connected to the first processing device 102 after display of the interface 120 (e.g., the second control device 104b is connected in response to a prompt displayed in the interface 120).

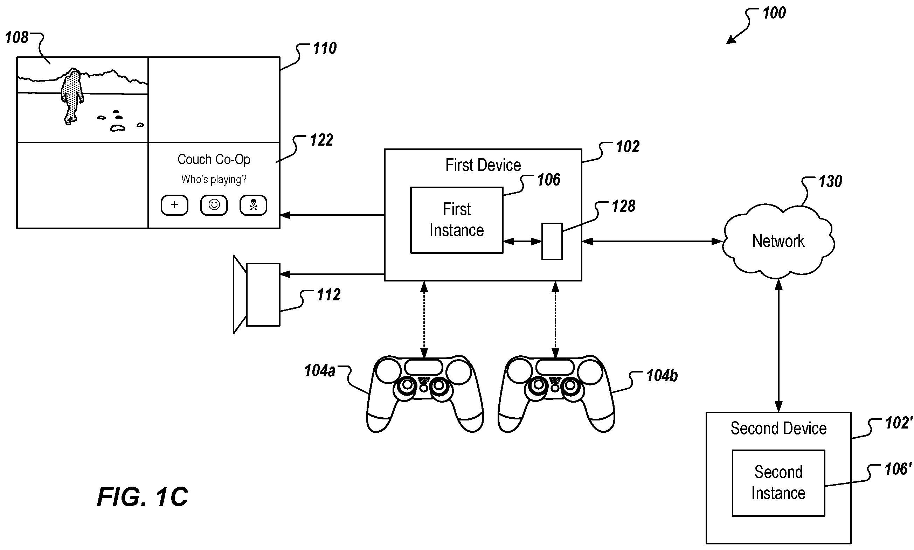

Referring now to FIG. 1C, which can be representative of a time *t*₃, an invite interface 122 can be displayed to enable selection of a profile of a second user that is to be added. For example, the second user can use the second control device 104b to select a profile from a list of profiles that are available or add a new profile.

In some examples, a coordination module 128 of the first processing device 128 establishes communication with a second processing device 102' over a network 130. For example, and in response to a second user being added, the coordination module 128 can transmit a request for connection to a second processing device. In some examples, the request can be transmitted to a gaming platform (e.g., a cloud-based service). In some examples, in response to the request, a session is established between the first processing device 102 and the second processing device 102'.

In accordance with implementations of the present disclosure, the second processing device 102' can execute a second instance 106' that the second user interacts with using the second control device 104b. In some examples, the second instance 106' can be another instance of the video game of the first instance 106. In some examples, the second instance 106' can be an instance of another, different video game.

In some implementations, the second processing device 102' can be any appropriate device that can execute the second instance 106' (e.g., a gaming console, a smartphone, a desktop computer, a tablet computing device, a server). In some examples, the second processing device 102' is considered a remote device in that the second processing device 102' is located remote from the first control device 104a and the second control device 104b (e.g., such that neither the first control device 104a nor the second control device 104b can directly connect to the second processing device 102'). By way of non-limiting example, the second processing device 102' can be located outside of an environment of the first processing device 102 (e.g., a different room or building). For example, the second processing device 102' can be provided as a server provided within a cloud-based service.

In some examples, the second processing device 102' is considered a local device in that the second processing device 102' is located proximate to the first user and the second user. For example, the second processing device 102' can belong to one of the first user and the second user interacting with the first processing device 102. For example, rather than being a device such as a gaming console, the second processing device 102 can be a smartphone or a tablet computing device of one of the first user or the second user. The second processing device 102' can be any suitable device for executing the second instance 106' and communicating with the first processing device 102 over the network 130. Although, in such a case, the second processing device 102' is considered proximate, the first processing device 102 is directly coupled to the display 108 for displaying graphics of the first instance 106 and/or the second instance 106'.

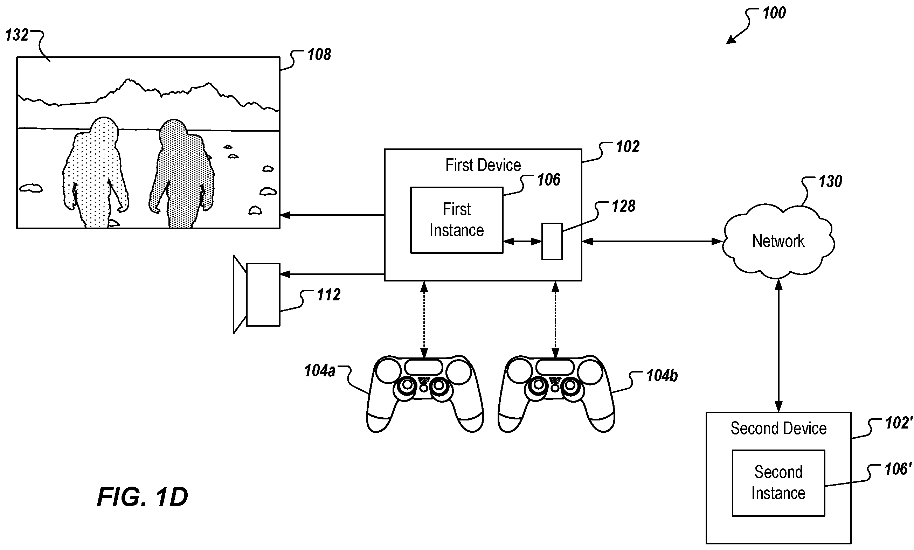

Referring now to FIG. 1D, which can be representative of a time *t*₄, the first instance 106 and the second instance 106' are of the same video game. That is, the first user plays the video game using the first control device 104a to interact with the first instance 106 and the second user plays the video game using the second control device 104b to interact with the second instance 106'. The example of FIG. 1D can be representative of a shared scene 132 (e.g., a cutscene) that is displayed over the whole of the display 108. For example, the shared scene 132 of FIG. 1D can be displayed at the onset of play in couch co-op at the time *t*₄.

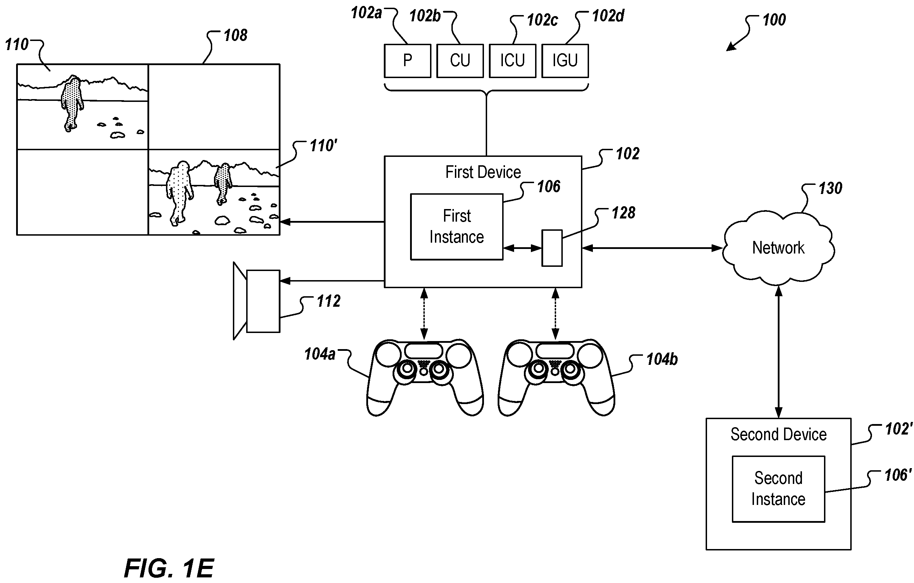

Referring now to FIG. 1E, which can be representative of a time *t*₅, play in couch co-op is ongoing in a multiplayer session, in which the first graphics 110 of the video game are displayed from the point-of-view (POV) of the first user within the video game and second graphics 110' of the video game are displayed from the POV of the second user within the video game. More particularly, the display 108 is configured to display images generated by the first processing device 102 to both the first user and the second user, with the displayed images being dependent upon both the first instance 106 and the second instance 106'.

In some implementations, it can occur that the multiplayer gaming (e.g., couch co-op) is to be initiated while a first instance (e.g., the first instance 106) is ongoing. For example, a first user can play a video game with the first instance, executed by a first processing device (e.g., the first processing device 102), processing input from a first control device (e.g., the first control device 104a) of the first user and providing output to a display (e.g., the display 108), a speaker (e.g., the speaker 112), and/or the first control device.

In some implementations, initiation of multiplayer gaming (e.g., couch co-op) can be suggested by the first processing device based on context. Example context can include, without limitation, detection of an event, such as presence of multiple users. For example, activation of a second control device (e.g., the second control device 104b) can be detected (e.g., from idle, waking up the second control device). In some examples, if activation of the second control device is detected and it is determined that a local game session is ongoing with the first control device active, multiplayer gaming can be initiated. For purposes of non-limiting illustration, reference can be made to FIGs. 1A and 1B, where, at the time *t*₁, a gaming session is ongoing with the first instance 106 executed on the first processing device. The second control device 104b can be activated and, in response, at the time *t*₂, the interface 120 is displayed to initiate multiplayer gaming (e.g., convert the ongoing single player session to a multiplayer session).

In some implementations, a set of start-up parameters are defined for the local multiplayer experience. For example, the first processing device (local device) defines the start-up parameters, which can include the presence of devices available to the users at start-up time to define a scope of the adaptability available for the multiplayer experience. Example combinations of devices can include a display and one local device and a display and multiple local devices. In some examples, if only a single local device is available, it can be determined that the multiplayer experience is to use a remote device (e.g., the second instance 106' is executed on the second processing device 102', which is a server accessed through the network 130). In some examples, if multiple local devices are available, it can be determined that the multiplayer experience is to use the local devices (e.g., the second instance 106' is executed on the second processing device 102', which is a gaming console accessed through the network 130).

Referring again to FIG. 1E, during multiplayer gaming, the first processing device 102 is configured to receive inputs from each of the first control device 104a and the second control device 104b and to execute the first instance 106. The first processing device 102 is further configured to output images (e.g., as video game graphics) for display on the display 108 to the first user and the second user. In accordance with implementations of the present disclosure, the images are generated based on both the first instance 106 and the second instance 106'. In some examples, images are generated by the first instance 106 based on data output by the second instance 106'. In some examples, images can be generated by each of the first instance 106 and the second instance 106'. As also described herein, the first processing device 102 can be configured to output audio for at least one of the first instance 106 and the second instance 106'. In some implementations, this can include outputting audio for each of the first instance 106 and the second instance 106' using a different respective audio channel, such that each of the first user and the second user can be provided with audio for a respective instance. The second processing device 102' is configured to execute the second instance 106' responsive to inputs from the second control device 104b. In some examples, the inputs of the second control device 104b are transmitted to the second processing device 102' by the first processing device 102.

In some implementations, each of the first instance 106 and the second instance 106' is capable of supporting a single player. Consequently, if a third user is to join the multiplayer gaming session of the first user and the second user, a third instance would need to be instantiated and executed by a device. In some examples, the third instance could be executed on the second processing device 102' along with the second instance 106' (e.g., the second processing device 102' has sufficient technical resources to execute multiple instances). In some examples, the third instance could be executed on a third device (e.g., the second processing device 102' has insufficient technical resources to execute multiple instances).

In some examples, it can be considered appropriate to present the video output of each instance in a split-screen mode such that each instance is shown in a spatially distinct manner. This can be achieved by executing the first instance of the video game locally to generate a video output, while decoding video received from the remote device, which includes the output of the second instance. In some examples, the first instance can be updated based on the output of the second instance so as to represent both instances. This can include a shared screen for both players, so that both appear to be within the same game instance - with both avatars appearing within the same camera view, for example. For example, an object in the first instance can move in dependence upon physics simulations performed by the second instance, with the results of those simulations (or movement information for an object, for example) being output by the second instance for use by the first instance.

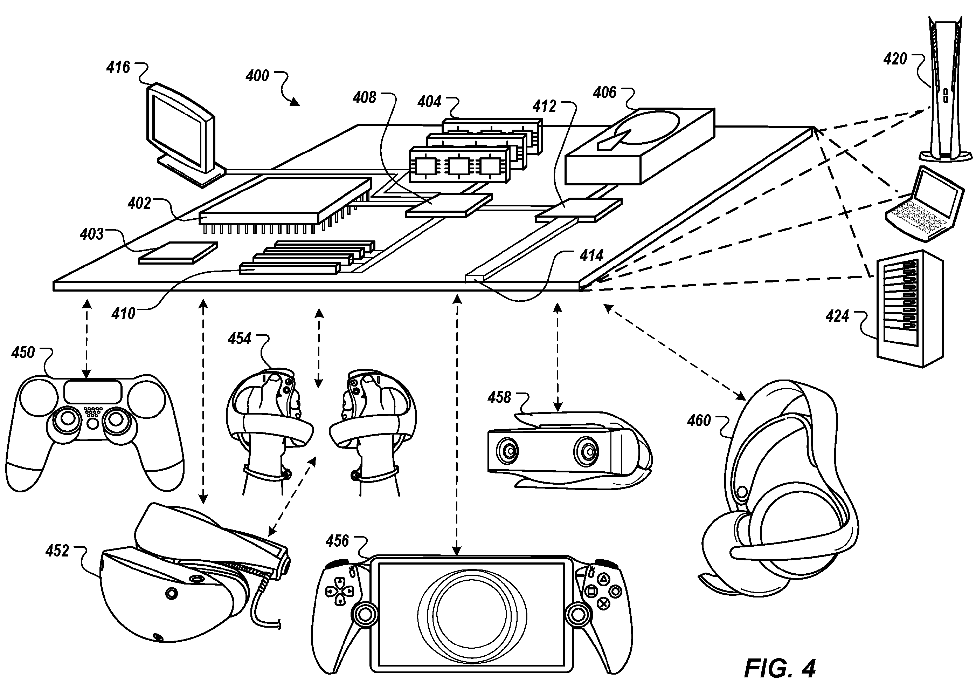

In some implementations, and as depicted in FIG. 1E, the first processing device 102 includes a processor 102a, a communication unit 102b, an input control unit 102c, and an image generation unit 102d. These functions can be implemented by one or more of a central processing unit (CPU), a graphics processing unit (GPU), and data port. Examples are described in further detail herein with reference to FIG. 4.

The processor 102a of the first processing device 102 is configured to execute the first instance 106 responsive to inputs received from the first control device 104a (e.g., inputs to control an avatar of the first user within the game environment). In some examples, and as described herein, inputs can include those that enable the second user to join the video game using the second instance 106' (e.g., issuing an invitation to the second user and/or configuring the first instance to 106 to enable other users to join).

In some implementations, the processor 102a is configured to adapt one or more settings of the first instance 106 based on one or more parameters (e.g., video settings) associated with the second instance 106', the output video of the second instance 106' (e.g., provided by the second processing device 102'), and/or properties of the network connection between the first processing device 102 and the second processing device 102'. This can enable the presentation of the first instance 106 to be in keeping with (that is, appearing similar or the same) that of the second instance 106' (or the expected presentation of the second instance 106', in the case that it is not displayed). This can be beneficial in an implementation in which images of both the first instance 106 and the second instance 106' are displayed simultaneously in a split-screen fashion (e.g., as depicted in FIG. 1E). In the case in which only images of the first instance 106 are displayed, this still provides advantages in providing video content that accounts for the display settings of the second instance 106', such as brightness, which can ensure user comfort and content visibility.

The processor 102a can be configured to modify a camera viewpoint associated with the first instance 106 based on an output by the second instance 106'. For example, responsive to data indicating a location of an avatar of the second user in the second instance 106', a camera viewpoint can be adjusted to ensure that both the avatar of the first user and the avatar of the second user are visible in the same image generated from the first instance 106 (e.g., as depicted in the second graphics 110' of FIG. 1E). This can aid an implementation in which a single image is displayed to the users that is representative of the gameplay of all users. In some cases, it is considered that, based upon such data, the output video can be switched between split-screen and a single image in dependence upon a threshold distance between the avatars of the users within the gaming environment, such that when the threshold distance is exceeded the display is changed to a split-screen view.

In some implementations, the processor 102a can be configured to identify a latency associated with receipt of data from the second processing device 102' (e.g., a latency associated with the network connection and/or a processing time in transmitting inputs from the first processing device 102 to the second processing device 102'), and to apply an input latency and/or display latency to the execution of the first instance 106, responsive thereto. In other words, the processing of the first instance 106 can be adapted to provide an equal (or at least similar) latency to that of the second instance 106', so that each user is able to interact with their respective instances in a mutually consistent manner. An input latency refers to delaying the provision of the inputs, whilst a display latency refers to delaying the display of images the users. In some examples, the introduced latency can be a fixed value that is representative of an average or expected latency. In some examples, the introduced latency can be a dynamic value that is responsive to real-time measurement of latency.

The processor 102a can be further configured to adapt settings associated with the first instance 106 and/or instruct adaptation of settings of the second instance 106' so as to manage a local processing load or the like. For example, executing an instance while decoding received video content can place a significant burden on technical resources of a device. In view of this, the video quality of one or more instances can be modified (e.g., reduced) so as to reduce this burden and ensure that processing can be effectively managed.

The communication unit 102b is configured to receive data from a second processing device 102' through the network 130. In some examples, the data corresponds to the second instance 106' being executed concurrently with the first instance 106. The communication unit 102b can be further configured to perform other communications, such as the transmission of inputs described with reference to the input control unit 102c. In some examples, the communication unit 102b is configured to transmit information to the second processing device 102 about the initiation of a multiplayer gaming session, such as a location of an avatar of the first user in the gaming environment, or other game state information such as a current stage, user loadout, quest, and the like.

The data corresponding to the second instance 106' can be provided in any suitable format. In some examples, the communication unit 102b is configured to receive data representative of output video of the second instance 106' (optionally with the associated audio). The communication unit 102b can be configured to receive data representing the results of one or more simulations (such as physics simulations for in-game interactions by the second user) performed by the second instance 106', where the results of the one or more simulations are provided to the first instance 106.

The communication unit 102b can be considered optional, as a number of different implementations might not require any communication - such as when multiple instances are executed locally by the processor 102b of the first processing device 102. In such a case, the multiple instances can be configured to communicate directly without the need of a separate communication unit.

The input control unit 102c is configured to provide inputs received from the first control device 104a to the first instance 106 and to transmit inputs received from the second control device 104b to the second processing device 102' over the network 130. In some examples, this can be performed by an in-game function associated with the first instance 106 (or a separate game-specific tool that is executed alongside the video game), or it can be handled externally to the game such as by a system-level function provided by an operating system run by the first processing device 102.

The image generation unit 102d is configured to generate images for display based on both the first instance 106 and the second instance 106', with these images being provided for output to both the first user and second user by the display 108. In some examples, the image generation unit 102d is configured to generate a split-screen image including output video of each of the first instance 106 and the second instance 106'. In some examples, the first instance 106 is used to generate images for display for both the first user and the second user. In some examples, a format is dynamic and is responsive to in-game events or conditions, such as based upon avatar proximity within the game environment such that as the users move apart a split-screen is preferred, or switching to a single screen during cutscenes or the like.

While discussed above with the first instance being executed locally, it is also considered that the first processing device could be implemented as a thin client or the like that decodes video received from multiple remote game instances. This can be particularly suitable for low-powered devices such as mobile phones or portable gaming consoles. This thin client can include the communication unit 102b, the input control unit 102c, and the image generation unit 120d, while the functionality of the processor 102a is provided remotely (such as by a games console or cloud gaming server). As such, the thin client is configured to receive inputs from the multiple controllers, route the inputs to the respective instances, and receive video that is to be displayed to the users who are local to the thin client.

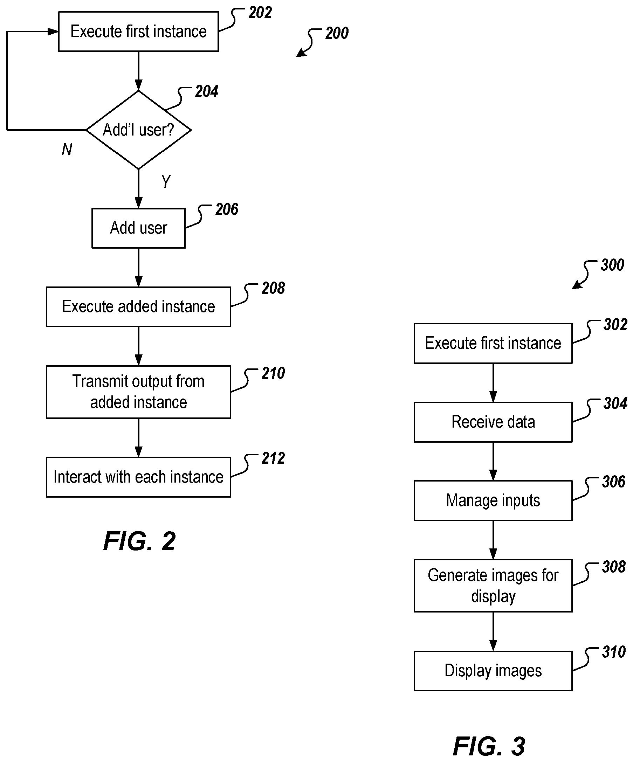

FIG. 2 depicts an example process 200 that can be executed in accordance with implementations of the present disclosure. In some examples, the example process 200 is provided using one or more computer-executable programs executed by one or more computing devices.

A first instance of a game is executed at a local processing device (202) For example, and as described in detail herein with reference to FIG. 1A, the first instance 106 of a video game is executed on the first processing device 102. In some examples, the first instance 106 is executed in a single player mode, in that only a single player is able to provide inputs to control the execution of the first instance 106 (e.g., through the first control device 104a). It is determined whether an additional user is to be added to the game (204). For example, and as described herein, it can be determined whether an event has occurred (e.g., activating a controller) that indicates that a user is to be added. If it is not determined that a user is to be added, the example process 200 loops back.

If it is not determined that a user is to be added, a user is added (206) and an added instance of the game is executed (208). This can be in response to, for example, inputs from the first user of the first instance, a request from the second user, and/or a combination of the two (such as an invitation-based implementation). At this stage, this can include associating a user profile of the second user with the game or inserting their user avatar into a game (e.g., as represented in the example of FIG. 1C). It can be noted that, adding a user is not taken to mean that the additional user is able to directly interact with the first instance. In the case that the second instance is not currently being executed no functionality is initially available to the additional user. For example, and as described herein with reference to FIG. 1C, a request for connection to a second processing device can be transmitted to a gaming platform (e.g., a cloud-based service) and, in response to the request, a session is established between the first processing device 102 and the second processing device 102', which executes the second instance 106'. In some examples, adding a user to the game means that the first instance and the second instance will each provide interactivity with a shared game environment - for instance, meaning that the first user's avatar and the second user's avatar are present in the same game environment (e.g., as depicted in FIGs. 1D and 1E).

Output of the added instance is transmitted (210). For example, output of the second instance 106' is transmitted from the second processing device 102' to the first processing device 102 (e.g., over the network 130). In some examples, the output can include any suitable data or content as appropriate for a given implementation. For instance, data regarding a location of an avatar of the second user or interactions may be output, or the results of physics simulations associated with actions of the second user within the second instance cam be output to the first processing device to enable elements of the second instance to be incorporated into those of the first instance. Alternatively, or in addition, the output from the second instance includes video and/or audio of the second instance - such as the rendered video showing interactions of the second user with the second instance. In the case that no video is output by the second instance, execution of the second instance can be modified so as to not render any images - this can reduce a processing burden upon the second processing device, enabling implementation by a device with reduced processing power and/or improving the energy efficiency of such an arrangement.

Interactions with each instance are executed (212). In some examples, interactions are controlled by users operating respective controllers, each providing input to the first processing device. In the case of inputs of the second user, these inputs are transmitted to the second processing device to enable the inputs to be processed using the second instance. The first processing device is configured to display the results of the interactions with the two separate instances.

FIG. 3 depicts an example process 300 that can be executed in accordance with implementations of the present disclosure. In some examples, the example process 300 is provided using one or more computer-executable programs executed by one or more computing devices. The example process 300 of FIG. 3 represents a multiplayer session, in which a first processing device (e.g., the first processing device 102) is configured to receive inputs from each of multiple controllers (e.g., the first control device 104a, the second control device 104b) associated with respective users. Here, a first instance (e.g., the first instance 106) is responsive to inputs received from a first control device, and a second instance (e.g., the second instance 106') is responsive to inputs received from a second control device.

A first instance is executed by the first processing device (302). For example, the first processing device 102 executes the first instance 106. Data from a second processing device is received (304). For example, data from the second processing device 102' is received by the first processing device 102 over the network 130. The data is representative of the second instance 106' being executed concurrently with the first instance 106. Inputs received from multiple controllers are managed (306). For example, the first control device 104a and the second control device 104b each provide inputs responsive to physical actions of the first user and the second user, respectively. In some examples, managing the inputs includes providing inputs received from the first control device 104a to the first instance 106 and transmitting inputs received from the second control device 104b to the second instance. Images are generated for display based on the multiple instances (308) and the generated images are displayed (310). For example, the images are displayed to the first user and the second user on the display 108.

FIG. 4 depicts an example computing device 400 and associated accessories that can be employed to execute implementations of the present disclosure. The computing device 400 is intended to represent various forms of gaming consoles such as PS5^{®}, PS4^{®}, PS3^{®}, PS2^{®} etc., desktops, workstations, personal digital assistants, servers, blade servers, mainframes, and other appropriate computers. The components shown here, their connections and relationships, and their functions, are meant to be examples only, and are not meant to be limiting. The computing device 400 can form at least a portion of a gaming system that can include one or more remote computing devices such as ones implementing a cloud-based portal or gaming platform.

In various implementations, the computing device 400 includes some combination of one or more processors or central processing units (CPUs) 402, one or more graphic processing units (GPUs) 403, memory 404, one or more storage devices 406, a high-speed interface 408, and/or a low-speed interface 412. In some implementations, the high-speed interface 408 connects to the memory 404 and multiple high-speed expansion ports 410. In some implementations, the low-speed interface 412 connects to a low-speed expansion port 414 and the storage device 404. In some implementations, the high-speed interface 408 connects to the storage device 404. Each of the processor 402, the GPU 403, the memory 404, the storage device 406, the high-speed interface 408, the high-speed expansion ports 410, and the low-speed interface 412, are interconnected using various buses, and may be mounted on a common motherboard or in other manners as appropriate. The processor 402 can process instructions for execution within the computing device 400, including instructions stored in the memory 404 and/or on the storage device 406 to display graphical information for a graphical user interface (GUI) on an external input/output device, such as a display 416 coupled to the high-speed interface 408. In other implementations, multiple processors and/or multiple buses may be used, as appropriate, along with multiple memories and types of memory. In addition, multiple computing devices may be connected, with each device providing portions of the necessary operations (e.g., as a server bank, a group of blade servers, or a multi-processor system).

The memory 404 stores information within the computing device 400. In some implementations, the memory 404 is a volatile memory unit or units. In some implementations, the memory 404 is a non-volatile memory unit or units. The memory 404 may also be another form of a computer-readable medium, such as a magnetic or optical disk. In some implementations, the memory 404 includes Graphics Double Data Rate (GDDR) memory such as GDDR6 memory configured to provide a unified memory architecture with a high bandwidth. In some implementations, the memory can include high speed memory such as GDDR2, GDDR3, GDDR4, GDDR5, GDDR5X, GDDR6X, GDDR6W or GDDR7. Such high-speed memory can facilitate rapid data access and seamless multitasking, supporting gaming and multimedia applications.

The storage device 406 is capable of providing mass storage for the computing device 400. In some implementations, the storage device 406 may be or include a computer-readable medium, such as a hard disk device, an optical disk device, a flash memory, or other similar solid-state memory device, or an array of devices, including devices in a storage area network or other configurations. In some implementations, the storage device 406 can include a high capacity solid-state drive (SSD) configured to support a high throughput (e.g., 5.5 GB/s or more). Such an SSD can facilitate fast load times, enabling near-instantaneous game booting, level transitions, and asset streaming. In some implementations, the storage device 406 can be configured to support expandable storage via compatible non-volatile memory express (NVMe) SSDs. Instructions can be stored in an information carrier, and when executed by one or more processing devices, such as processor 402, perform one or more methods, such as those described above. The instructions can also be stored by one or more storage devices, such as non-transitory computer-readable or machine-readable mediums, such as the memory 404, the storage device 406, or memory on the processor 402. The instructions can constitute software for providing interactive game play on a user interface such as a graphical user interface (GUI) presented on the display 416.

The high-speed interface 408 manages bandwidth-intensive operations for the computing device 400, while the low-speed interface 412 manages lower bandwidth-intensive operations. Such allocation of functions is an example only. In some implementations, the high-speed interface 408 is coupled to the memory 404, the display 416 (e.g., through a graphics processor or accelerator), and to the high-speed expansion ports 410, which may accept various expansion cards. In the implementation, the low-speed interface 412 is coupled to the storage device 406 and the low-speed expansion port 414. The low-speed expansion port 414, which may include various communication ports (e.g., Universal Serial Bus (USB) Type-A and Type-C ports, High-Definition Multimedia Interface (HDMI) ports, Bluetooth, Ethernet, wireless Ethernet) may be coupled to one or more input/output and/or accessory devices. Such input/output and accessory devices can include a controller 450 such as a DualSense^{®}, DualShock^{®}, or Access^{™} controllers for PlayStation^{®} devices, a virtual reality (VR) or augmented reality (AR) headset 452 such as the PS VR2 headset, accessory controllers 454 such as PS VR2 Sense^{™}, a handheld gaming device 456 such as PlayStation Portal^{®}, a camera 458, and/or an earphone/headphone set 460 such as the PULSE Elite^{™} headset or the Pulse Explore^{™} earbuds. In some implementations, the computing device 400 includes one or more acoustic transducers, and/or is connected to one or more external acoustic transducers such as one or more speakers associated with the display 416.

The computing device 400 may be implemented in a number of different forms, as shown in the FIG. 4. For example, the computing device 400 may be implemented as a gaming console 420, or as one or more servers 424 or as a rack within a server. In some implementations, the computing device 400 may be implemented as a personal computer such as a laptop computer 422. In some implementations, the computing device 400 can be implemented as a mobile device such as the connected handheld gaming device 456. In some implementations, a computing device can include one or more of the computing device 400, and an entire system may be made up of multiple computing devices communicating with each other. For example, a gaming system can include one or more of a gaming console 420, one or more accessories, and a remote platform such as a cloud-based platform implemented on one or more servers 424.

The processor 402 can be implemented as a chipset of chips that include separate and multiple analog and digital processors. For example, the processor 402 can be a multi-core processor that supports high-speed processing and enables complex computational tasks, real-time physics simulations, and advanced artificial intelligence (AI) capabilities. In one example, the processor 402 includes at least 8 cores, at least 16 threads, and operates at variable frequencies around 3.5 GHz or more. In some implementations, the processor 402 may be a Complex Instruction Set Computers (CISC) processor, a Reduced Instruction Set Computer (RISC) processor, or a Minimal Instruction Set Computer (MISC) processor.

**In** some implementations, the GPU 403 includes a custom GPU that supports an advanced architecture such as the RDNA 2 architecture developed by AMD. In one example, the GPU 403 includes at least 36 compute units running at speeds of 2 GHz or more, and delivers performance of at least 10 teraflops. The GPU 403 can be configured to support high quality graphics rendering. For example, the GPU 403 can be configured to support hardware-accelerated ray tracing for enhanced realism in lighting and reflections, thereby providing a highly immersive gaming experience.

The computing device can be configured to interact with one or more connected input/output or accessory device in providing the gaming experience. In some implementations, the computing device communicates with a handheld controller 450-e.g., a DualSense^{®}, DualShock^{®}, or Access^{™} controller for PlayStation^{®} devices-to provide the gaming experience. In some implementations, the controller 450 features a high-fidelity haptic feedback system with one or more actuators that simulate a wide range of tactile sensations. In some implementations the controller 450 includes one or more adaptive triggers that adjust resistance based on in-game actions to provide for a realistic feel. The ergonomic design of the controller 450 can be configured to allow for comfortable use even in long gaming sessions. For example, the controller 450 can include textured grips and an optimized button layout. In some implementations, the controller 450 includes one or more of: integrated motion sensors, a high-resolution touchpad, and a built-in microphone array. The controller 450 includes an array of buttons, joysticks, and other controls that allow a user to interact with the computing device 400 to participate in interactive gameplay presented, for example, on a display device such as the display 416. The controller 450 can be powered by one or more regular or rechargeable batteries and supports both wireless and wired connectivity with the computing device 400, for example, via Bluetooth, WiFi, USB-C etc., or via a proprietary connection such as PlayStation Link^{™}. In some implementations, the controller 450 includes a light bar and player indicators for visual feedback and customization.

In some implementations, the input/output or accessory device includes a VR/AR headset 452. One example of such a headset is the PlayStation VR2 (PS VR2) headset that is configured to provide an immersive and interactive gaming experience. In some implementations, the headset 452 features dual organic light emitting device (OLED) displays with a combined resolution of 4000 x 2080 pixels-thus providing sharp visuals and a wide field of view. In some implementations, the VR/AR headset 452 includes advanced eye-tracking technology that enables foveated rendering, optimizing performance by focusing on where the user is looking. In some implementations, the headset 452 includes integrated cameras that facilitate tracking head movements without external sensors. In some implementations, the headset includes haptic feedback for tactile sensations and/or one or more acoustic transducers configured to provide a spatial sound effect the user. The headset 452 can include an adjustable headband and cushioned padding, and can be configured to connect to the computing device 400 either over a wireless network (e.g., over a WiFi^{®} or Bluetooth^{®} connection, or a proprietary connection such as PlayStation Link^{™}) or over a wire such as a USB-C cable.

In some implementations, the headset 452 can be configured to work in conjunction with one or more accessory controllers 454 such as the PlayStation VR2 Sense^{™} controllers. The accessory controllers 454 can be configured to enhance the immersive gaming experience through various features such as advanced haptic feedback for detailed in-game sensations, adaptive triggers with dynamic resistance to simulate real-world actions, and finger touch detection for natural interactions. The ergonomics of the accessory controllers 454 can be configured to provide a comfortable experience even during extended gameplay. In some implementations, the accessory controllers include one or more integrated sensors (accelerometer, gyroscope, etc.) and cameras to provide motion tracking. The accessory controllers 454 can be configured to connect to the computing device 400 and/or the headset 452 over a wireless connection such as WiFi^{®} or Bluetooth^{®}.

**In** some implementations, the computing device 400 can be connected to a handheld gaming device 456 such as the PlayStation Portal^{®}. The handheld gaming device 456 can be configured to stream games and media from the computing device 400 via a wireless connection such as WiFi^{®} or Bluetooth^{®}. The handheld gaming device 456 includes a high-resolution screen that allows users to play games and/or stream media remotely without using the display 416 connected to the computing device 400. This allows the display to be used for other purposes while the computing device 400 facilitates gameplay on the handheld gaming device 456. In some implementations, the handheld gaming device 456 is configured to act as a streaming receiver without running games natively on the device 456 itself. This makes the handheld gaming device 456 a convenient option for playing games run on the computing device 400, while leaving a TV connected to the computing device 400 free to be used for viewing other media. The handheld gaming device 456 can includes buttons and features similar to (or even same as) the controller 450, thus providing for a similar gaming experience as that with the controller 450.

In some implementations, the input/output or accessory devices can include a camera 458 and/or an earphone/headphone set 460 such as the PULSE Elite^{™} headset or the Pulse Explore^{™} earbuds. The camera 458 can be used to track user-movements, which in turn can be used as an input to an interactive game being executed on the computing device 400. The earphone/headphone set 460 can be used to provide audio feedback/output to a user from the computing device 400. In some implementations, the earphone/headphone set 460 can include a microphone configured to receive spoken inputs/instructions that in turn can be used to control an interactive game being executed on the computing device 400.

While this specification contains many specific implementation details, these should not be construed as limitations on the scope of what is being claimed, which is defined by the claims themselves, but rather as descriptions of features that may be specific to particular embodiments. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially be claimed as such, one or more features from a claimed combination can in some cases be excised from the combination, and the claim may be directed to a sub-combination or variation of a sub-combination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

### EMBODIMENTS

Although the present invention is defined in the claims, it should be understood that the present invention can also (alternatively) be defined in accordance with the following embodiments:
1. A system for executing a video game, the system comprising:
   a first control device associated with a first user and a second control device associated with a second user;
   a first processing device configured to receive inputs from each of the first control device and the second control device, the first processing device comprising:
      a processor configured to execute a first instance of the video game,
      a communication unit configured to receive data from a second processing device over a network, the data corresponding to a second instance of the video game being executed concurrently with the first instance, the second instance being instantiated by the second processing device in response to one or more events detected by the first processing device,
      an input control unit configured to provide inputs received from the first control device to the first instance of the video game, and to transmit inputs received from the second control device to the second processing device, the first instance being responsive to inputs received from the first control device and the second instance being responsive to inputs received from the second control device, and
      an image generation unit configured to generate images for display based on output of the first instance and output of the second instance; and
   a display device configured to display the images generated by the image generation unit.
2. The system of embodiment 1, wherein the second processing device is a games console or a cloud gaming server communicably connected to the first processing device over the network.
3. The system of embodiment 1, wherein the communication unit is configured to receive data comprising output video of the second instance of the video game.
4. The system of embodiment 3, wherein the image generation unit is configured to generate a split-screen image comprising output video of each of the first and second instances of the video game.
5. The system of embodiment 3, wherein the processor is configured to adapt one or more settings of the first instance of the video game based on one or more of one or more parameters associated with the second instance of the video game, the output video of the second instance of the video game, and properties of the network.
6. The system of embodiment 1, wherein the communication unit is configured to receive data comprising results of one or more simulations performed by the second instance of the video game, wherein the results of the one or more simulations are provided to the first instance of the video game.
7. The system of embodiment 1, wherein the processor is configured to identify a latency associated with receiving of data from the second processing device, and to apply one or more of an input latency and a display latency to execution of the first instance responsive to the latency.
8. The system of embodiment 1, wherein the first processing device is configured to output audio for each instance of the video game using different respective audio channels.
9. The system of embodiment 1, wherein the processor is configured to modify a camera viewpoint associated with the first instance of the video game responsive to an output by the second instance of the video game.
10. The system of embodiment 1, wherein each of the first instance and second instance of the video game are capable of supporting a single player only.
11. The system of embodiment 1, wherein the second instance of the video game is capable of supporting multiple players.
12. The system of embodiment 11, further comprising a third control device associated with a third user and the input control unit is further configured to transmit inputs received from the third control device to the second processing device, the second instance being further responsive to inputs received from the third control device.
13. A method for executing a video game by a first processing device configured to receive inputs from each of two or more control devices associated with respective users, comprising a first control device associated with a first user and a second control device associated with a second user, the method comprising:
   executing a first instance of the video game at the first processing device;
   receiving data from a second processing device over a network, the data corresponding to a second instance of the video game being executed concurrently with the first instance, the second instance being instantiated by the second processing device in response to one or more events detected by the first processing device;
   providing inputs received from the first control device to the first instance of the video game, the first instance being responsive to inputs received from the first control device;
   transmitting inputs received from the second control device to the second processing device, the second instance being responsive to inputs received from the second control device;
   generating images for display based on the first instance and the second instance of the video game; and
   displaying the generated images.
14. The method of embodiment 13, wherein the second instance of the video game is capable of supporting multiple players.
15. The method of embodiment 14, further comprising transmitting inputs received from a third control device associated with a third user to the second processing device, the second instance being further responsive to inputs received from the third control device.
16. One or more non-transitory computer-readable media coupled to one or more processors and having instructions stored thereon which, when executed by the one or more processors, cause the one or more processors to perform operations for executing a video game by a first processing device configured to receive inputs from each of two or more control devices associated with respective users, comprising a first control device associated with a first user and a second control device associated with a second user, the operations comprising:
   executing a first instance of the video game at the first processing device;
   receiving data from a second processing device over a network, the data corresponding to a second instance of the video game being executed concurrently with the first instance, the second instance being instantiated by the second processing device in response to one or more events detected by the first processing device;
   providing inputs received from the first control device to the first instance of the video game, the first instance being responsive to inputs received from the first control device;
   transmitting inputs received from the second control device to the second processing device, the second instance being responsive to inputs received from the second control device;
   generating images for display based on the first instance and the second instance of the video game; and
   displaying the generated images.
17. The one or more non-transitory computer-readable media of embodiment 16, wherein the second instance of the video game is capable of supporting multiple players.
18. The one or more non-transitory computer-readable media of embodiment 16, wherein operations further comprise transmitting inputs received from a third control device associated with a third user to the second processing device, the second instance being further responsive to inputs received from the third control device.

## Claims

1. A system for executing a video game, the system comprising:
a first control device associated with a first user and a second control device associated with a second user;
a first processing device configured to receive inputs from each of the first control device and the second control device, the first processing device comprising:
a processor configured to execute a first instance of the video game,
a communication unit configured to receive data from a second processing device over a network, the data corresponding to a second instance of the video game being executed concurrently with the first instance, the second instance being instantiated by the second processing device in response to one or more events detected by the first processing device,
an input control unit configured to provide inputs received from the first control device to the first instance of the video game, and to transmit inputs received from the second control device to the second processing device, the first instance being responsive to inputs received from the first control device and the second instance being responsive to inputs received from the second control device, and
an image generation unit configured to generate images for display based on output of the first instance and output of the second instance; and
a display device configured to display the images generated by the image generation unit.

2. The system of claim 1, wherein the second processing device is a games console or a cloud gaming server communicably connected to the first processing device over the network.

3. The system of any one of claims 1 or 2, wherein the communication unit is configured to receive data comprising output video of the second instance of the video game.

4. The system of claim 3, wherein the image generation unit is configured to generate a split-screen image comprising output video of each of the first and second instances of the video game.

5. The system of any one of claims 3 or 4, wherein the processor is configured to adapt one or more settings of the first instance of the video game based on one or more of one or more parameters associated with the second instance of the video game, the output video of the second instance of the video game, and properties of the network.

6. The system of any one of claims 1 to 5, wherein the communication unit is configured to receive data comprising results of one or more simulations performed by the second instance of the video game, wherein the results of the one or more simulations are provided to the first instance of the video game.

7. The system of any one of claims 1 to 6, wherein the processor is configured to identify a latency associated with receiving of data from the second processing device, and to apply one or more of an input latency and a display latency to execution of the first instance responsive to the latency.

8. The system of any one of claims 1 to 7, wherein the first processing device is configured to output audio for each instance of the video game using different respective audio channels.

9. The system of any one of claims 1 to 8, wherein the processor is configured to modify a camera viewpoint associated with the first instance of the video game responsive to an output by the second instance of the video game.

10. The system of any one of claims 1 to 9, wherein each of the first instance and second instance of the video game are capable of supporting a single player only.

11. The system of any one of claims 1 to 10, wherein the second instance of the video game is capable of supporting multiple players; optionally
wherein the system further comprises a third control device associated with a third user and the input control unit is further configured to transmit inputs received from the third control device to the second processing device, the second instance being further responsive to inputs received from the third control device.

12. A method for executing a video game by a first processing device configured to receive inputs from each of two or more control devices associated with respective users, comprising a first control device associated with a first user and a second control device associated with a second user, the method comprising:
executing a first instance of the video game at the first processing device;
receiving data from a second processing device over a network, the data corresponding to a second instance of the video game being executed concurrently with the first instance, the second instance being instantiated by the second processing device in response to one or more events detected by the first processing device;
providing inputs received from the first control device to the first instance of the video game, the first instance being responsive to inputs received from the first control device;
transmitting inputs received from the second control device to the second processing device, the second instance being responsive to inputs received from the second control device;
generating images for display based on the first instance and the second instance of the video game; and
displaying the generated images.

13. The method of claim 12, wherein the second instance of the video game is capable of supporting multiple players; optionally
wherein the method further comprises transmitting inputs received from a third control device associated with a third user to the second processing device, the second instance being further responsive to inputs received from the third control device.

14. One or more non-transitory computer-readable media coupled to one or more processors and having instructions stored thereon which, when executed by the one or more processors, cause the one or more processors to perform operations for executing a video game by a first processing device configured to receive inputs from each of two or more control devices associated with respective users, comprising a first control device associated with a first user and a second control device associated with a second user, the operations comprising:
executing a first instance of the video game at the first processing device;
receiving data from a second processing device over a network, the data corresponding to a second instance of the video game being executed concurrently with the first instance, the second instance being instantiated by the second processing device in response to one or more events detected by the first processing device;
providing inputs received from the first control device to the first instance of the video game, the first instance being responsive to inputs received from the first control device;
transmitting inputs received from the second control device to the second processing device, the second instance being responsive to inputs received from the second control device;
generating images for display based on the first instance and the second instance of the video game; and
displaying the generated images.

15. The one or more non-transitory computer-readable media of claim 14, wherein the second instance of the video game is capable of supporting multiple players; optionally
wherein the operations further comprise transmitting inputs received from a third control device associated with a third user to the second processing device, the second instance being further responsive to inputs received from the third control device.
